# EUROPÄISCHE PATENTSCHRIFT

(11) **EP 2 707 590 B1**
(45) Veröffentlichungstag und Bekanntmachung des Hinweises auf die Patenterteilung: **06.04.2016**
(21) Anmeldenummer: 12717711.1
(22) Anmeldetag: 27.04.2012
(51) Int. Cl.: F02M 26/00, F16K 11/044

(54) **VENTILVORRICHTUNG FÜR EINE VERBRENNUNGSKRAFTMASCHINE**
VALVE DEVICE FOR AN INTERNAL COMBUSTION ENGINE
DISPOSITIF DE SOUPAPE POUR UN MOTEUR À COMBUSTION INTERNE

(30) Priorität: 11.05.2011 DE 102011050263
(43) Veröffentlichungstag der Anmeldung: 19.03.2014
(73) Patentinhaber: Pierburg GmbH, 41460 Neuss (DE); Volkswagen AG, 38436 Wolfsburg (DE)
(72) Erfinder: VITT, Stefan, 41516 Grevenbroich (DE); SARI, Osman, 41516 Grevenbroich (DE); WAGNER, Michael, 40589 Düsseldorf (DE); HOMEYER, Bernd, 31234 Edemissen (DE)
(74) Vertreter: Patentanwälte ter Smitten Eberlein Rütten Partnerschaftsgesellschaft
(86) Internationale Anmeldenummer: PCT/EP2012/057777
(87) Internationale Veröffentlichungsnummer: WO 2012/152601

(56) Entgegenhaltungen:
- WO-A1-2006/092401
- DE-A1- 19 648 482
- DE-A1- 19 733 964
- JP-A- 8 200 165
- US-A1- 2010 313 859

## Beschreibung

Die Erfindung betrifft eine Ventilvorrichtung für eine Verbrennungskraftmaschine mit einem Gehäuse, in dem zumindest ein Einlass und ein Auslass ausgebildet sind, zumindest einer Durchgangsöffnung, über die der zumindest eine Einlass mit dem zumindest einen Auslass fluidisch verbindbar ist, zumindest einem Ventilschließglied, über welches die Durchgangsöffnung regelbar ist, einer translatorisch mittels eines Aktors bewegbaren Ventilstange, auf der das zumindest eine Ventilschließglied angeordnet ist, einer Feder, die die Ventilstange umgibt und die sich mit ihrem ersten Ende gegen das zumindest eine Ventilschließglied abstützt und mit ihrem entgegengesetzten Ende gegen ein Anschlagelement abstützt und einem Schutzelement, welches im Wesentlichen die Feder umgibt.

Derartige Ventilvorrichtungen werden insbesondere zur Regelung eines rückgeführten Abgasstroms in einem Verbrennungsmotor zur Reduzierung von Schadstoffen im Abgas genutzt. Dabei wird über das Federelement sichergestellt, dass das Ventilschließglied auf den korrespondierenden Ventilsitz gedrückt wird. Je nach Einbauort des Abgasrückführventils kurz hinter dem Abgasauslass des Zylinders oder im Bereich des Saugrohres, im Niederdruckstrang oder im Hochdruckstrang, vor oder hinter einem Abgaskühler, ist das Abpasrückführventil unterschiedlichen Belastungen ausgesetzt. So liegt in unmittelbarer Nähe zum Abgasauslass des Zylinders eine hohe thermische Belastung vor, während hinter einem Abgaskühler eine relativ hohe Versottungsneigung zu erwarten ist.

Auch sind Zweiwegeventile bekannt, über welche wahlweise ein geregelter Abgasstrom über einen Abgaskühler oder einen Bypasskanal geführt werden kann, so dass ein hinter dem Abgaskühler angeordnetes Ventil je nach verwendetem Abgasrückführstrang einmal heißem Abgas und ein anderes Mal kaltem Abgas ausgesetzt ist.

Ein Ventil dieser Art ist beispielsweise aus der DE 197 33 964 A1 bekannt. Dieses Ventil ist stromabwärts eines Abgaskühlers beziehungsweise einer Bypassleitung angeordnet und weist einen Aktor auf, über den eine Ventilstange, auf der zwei Ventilschließglieder verschiebbar angeordnet sind, bewegbar ist. Zwischen den Ventilschließgliedern ist eine Feder angeordnet, über die die Ventilschließglieder gegen an der Ventilstange ausgebildete Anschläge belastet werden. Beide Ventilschließglieder sind konisch ausgebildet und liegen im nicht betätigten Zustand durch den Druck der Feder gegen korrespondierende Ventilsitze an. Bei Betätigung des Aktors wird je nach Richtung eines der ventilschließglieder durch den Anschlag vom Ventilsitz entgegen der Federkraft abgehoben, während das andere Ventilschließglied weiterhin durch die Federkraft gegen den Ventilsitz gedrückt wird. So kann wahlweise je nach Betätigungsrichtung ein Durchströmungsquerschnitt des Bypasskanals oder des Abgaskühlerauslasses geregelt werden. Allerdings ist die zentral im durchströmten Bereich angeordnete Feder hohen thermischen Belastungen und auftretenden Verschmutzungen ausgesetzt.

Des Weiteren wird in der EP 1 859 156 B1 eine Ventilvorrichtung offenbart, bei der die Feder eines derartig ausgebildeten Ventils von einem als Faltenbalg ausgeführten Ausgleichselement umgeben ist, dessen axiale Enden mit den Ventiltellern verbunden sind. Dieses Element soll dazu dienen, im dadurch eingeschlossenen Raum ein Vakuum zu erzeugen, so dass beide Ventilteller gleichzeitig von ihren Ventilsitzen abgehoben werden können. Dieser Faltenbalg schützt die Feder und diesen Ventilstangenbereich zwar auch vor einer Verschmutzung, jedoch ist seine Funktionalität bei hoher thermischer Belastung nicht mehr gegeben.

Zusätzlich sind aus der JP 08200165 A, der DE 196 48 482 A1 und der US 2010/0313859 A1 jeweils Ventilvorrichtungen mit einem Ventilglied bekannt, bei denen am Ventilglied eine zum Aktor weisende Hülse befestigt ist, die um eine zwischen einem Gehäuse und einem Lager der Ventilstange befestigte Hülse greift. Diese Hülsen müssen an den Gehäusen bei der Montage beziehungsweise an den Ventilgliedern befestigt werden.

Es stellt sich daher die Aufgabe, eine Ventilvorrichtung zu schaffen, welche sowohl bei hoher thermischer Belastung als auch in rußbelasteter Umgebung störungsfrei funktioniert. Dabei sollen Ablagerungen an der Ventilstange insbesondere in Bereichen die zur gleitenden Führung dienen ebenso vermieden werden wie eine thermische Überlastung einer Feder.

Diese Aufgabe wird durch eine Ventilvorrichtung mit den Merkmalen des Hauptanspruchs gelöst. Dadurch, dass das Element im Wesentlichen durch zwei ineinander greifende radial geschlossene Mantelflächen gebildet ist, von denen die erste gegen das zumindest eine Ventilschließglied anliegt und mit diesem bewegbar ist und die zweite gegen das Anschlagelement anliegt, wobei das Ventilschließglied relativ zum Anschlagelement bewegbar ist und wobei die ineinander greifenden, radial geschlossenen Mantelflächen an topfförmigen Bauteilen ausgebildet sind, durch deren Böden die Ventilstange ragt und die Feder die Böden der topfförmigen Bauteile an der ersten Seite gegen das Anschlagelement und an der gegenüberliegenden Seite gegen das Ventilschließglied drückt, wird die Ventilstange und die Feder von dem Abgasstrom abgeschirmt. Es entfällt die direkte Anströmung, wodurch eine thermische Entlastung und eine geringere Verschmutzung folgen. Die Befestigung der Schutzelemente wird deutlich erleichtert, da die topfförmigen Bauteile in ihrer Position gehalten werden, ohne eine stoffschlüssige Verbindung zum Ventilschließglied herstellen oder zusätzliche Befestigungsmittel verwenden zu müssen.

Vorzugsweise ist die eine der ineinander greifenden radial geschlossenen Mantelflächen in der anderen Mantelfläche angeordnet, wobei der Innendurchmesser der einen Mantelfläche größer ist als der Außendurchmesser der anderen Mantelfläche. So wird ein Klemmen zwischen den beiden Mantelflächen verhindert. Dennoch entsteht eine gute Dichtwirkung zwischen den beiden Schutzelementen, wodurch ein Eindringen von Schmutzpartikeln deutlich verringert wird.

In einer weiterführenden Ausführungsform sind die topfförmigen Bauteile Tiefziehteile. Diese sind besonders kostengünstig herstellbar.

Vorzugsweise ist das Ventilschließglied translatorisch bewegbar auf der Ventilstange angeordnet und über die Feder in Richtung eines Anschlags belastet, der mit der Ventilstange verbunden ist. Hierdurch kann ein fester Sitz des Ventilschließgliedes auf dem Ventilsitz im geschlossenen Zustand sichergesellt werden.

In einer besonders vorteilhaften Ausführung weist die Ventilstange an ihrem Ende ein Außengewinde auf, auf welches eine Mutter geschraubt ist, die als Anschlag dient. Durch diese Schraube kann die Lage des Ventilschließgliedes auf der Ventilstange verändert werden, so dass der Anschlag optimal zur Lage des Ventilsitzes positioniert werden kann.

In einer besonders bevorzugten Ausführung ist auf der Ventilstange ein zweites Ventilschließglied, welches als Anschlagelement für die Feder dient, und über welches eine zweite Durchgangsöffnung regelbar ist, die zu einem zweiten Einlass oder Auslass führt, beabstandet vom ersten Ventilschließglied angeordnet. Auf diese Weise kann ein kombiniertes Abgasrückführ- und Bypassventil geschaffen werden, dessen Durchlässe wahlweise regelbar sind.

Vorteilhafterweise weisen beide Ventilschließglieder Ausnehmungen auf, welche eine zu den Böden der topfförmigen Bauteile korrespondierende Form aufweisen und in die die topfförmigen Bauteile ragen. So entsteht eine einfache Positionierung und Vorfixierung der Schutzelemente an den Ventilschließgliedern beim Zusammenbau. Ein Kippen der Schutzelemente wird zuverlässig verhindert.

Weiterhin sind vorteilhafterweise an beiden Ventilschließgliedern sich in das Innere der Feder erstreckende ringförmige Vorsprünge ausgebildet, durch die 3in Abknicken der Feder verhindert wird. Diese Vorsprünge bilden einen verlängerten Führungsbereich.

In einer weiterführenden Ausführung sind beide Ventilschließglieder translatorisch verschiebbar auf der Ventilstange angeordnet und durch die Feder zwischen den beiden Ventilschließgliedern jeweils entgegengesetzt in Richtung von Anschlägen, die an der zur Feder entgegengesetzten Seite der beiden Ventilschließglieder an der Ventilstange ausgebildet sind, belastet. So besteht eine wahlweise Regelung der Durchströmungsquerschnitte bei dichtem Verschluss des jeweils geschlossenen Kanals. Des Weiteren wird eine relativ hohe Dichtigkeit zwischen dem Innenraum der Schutzelemente und dem äußeren Raum geschaffen. Auch sind die Ventilschließglieder durch die Feder in Richtung ihrer zugeordneten Ventilsitze belastet.

Eine derartige Ventilvorrichtung kann thermisch hoch belastet und somit kurz hinter dem Abgasauslass angeordnet werden, da eine Ableitung der Wärme über die Mantelflächen erfolgt. Eine partikelbelastete Umgebung schränkt die Funktionsfähigkeit nicht ein, da die Ventilstange, auf der die Ventilschließglieder gleiten müssen, nicht mit der belasteten Umgebung in Berührung kommt. So wird eine Ventilvorrichtung mit einer langen Lebensdauer bei schwierigen Umgebungseinflüssen geschaffen.

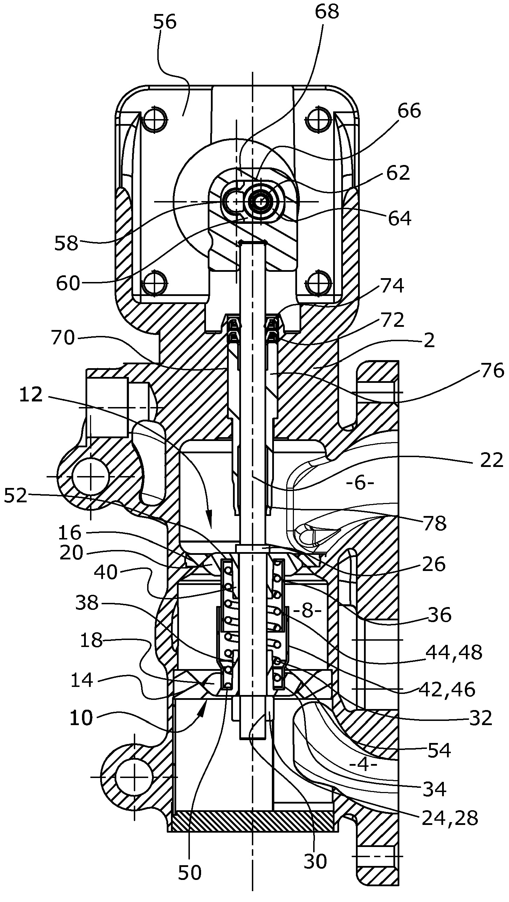

Ein Ausführungsbeispiel der Erfindung ist in der Figur dargestellt und wird nachfolgend beschrieben.

Die Figur zeigt eine Seitenansicht einer erfindungsgemäßen Ventilvorrichtung in geschnittener Darstellung.

Die erfindungsgemäße Ventilvorrichtung besteht aus einem Gehäuse 2, in dem zwei Einlässe 4, 6 und ein zentral zwischen den Einlässen 4, 6 angeordneter Auslass 8 ausgebildet sind. Zwischen den Einlässen 4, 6 und dem Auslass 8 sind zwei Durchgangsöffnungen 10, 12 im Gehäuse 2 ausgebildet, über die eine fluidische Verbindung von den Einlässen 4, 6 zum Auslass 8 hergestellt werden kann.

Diese Durchgangsöffnungen 10, 12 werden radial durch einen ersten Ventilsitz 14 und einen zweiten Ventilsitz 16 begrenzt, welche mit einem ersten Ventilschließglied 18 und einem zweiten Ventilschließglied 20 zusammenwirken, um die Größe eines freien durchströmbaren Querschnitts der Durchgangsöffnungen 10, 12 zu regeln.

Die beiden Ventilschließglieder 18, 20 sind auf einer Ventilstange 22 angeordnet, auf der sie translatorisch gleiten können. Die Länge der möglichen Gleitbewegung wird durch einen ersten Anschlag 24 für das erste Ventilschließglied 18 und einen zweiten Anschlag 26 für das zweite Ventilschließglied 20 beschränkt. Der erste Anschlag 24 wird einstellbar durch eine Mutter 28 gebildet, welche auf ein Außengewinde 30 am Ende der Ventilstange 22 aufgeschraubt wird. Je nachdem, wie weit die Mutter 28 auf die Ventilstange 22 aufgeschraubt wird, kann auf diese Weise beim Zusammenbau der Abstand zum fest an der Ventilstange 22 ausgebildeten zweiten Anschlag 26 vergrößert oder verkleinert werden.

Zwischen den beiden Ventilschließgliedern 18, 20 ist eine Feder 32 eingespannt, deren erstes Ende das erste Ventilschließglied 18 gegen die Mutter 28 drückt und deren entgegengesetztes zweites Ende das zweite Ventilschließglied 20 gegen den zweiten Anschlag 26 drückt. Zur Aufnahme der Feder 32 ist an den Ventilschließgliedern 18, 20 jeweils eine zur Feder 32 gerichtete Ausnehmung 34, 36 ausgebildet, deren Außendurchmesser geringfügig größer ist als der Außendurchmesser der Feder 32. Des Weiteren ist an den Ventilschließgliedern 18, 20 jeweils ein ringförmiger Vorsprung 38, 40 ausgebildet, der die Ventilstange 22 umgibt und sich in das Innere der Feder 32 erstreckt, und dessen Außendurchmesser entsprechend geringfügig kleiner ist als der Innendurchmesser der Feder 32.

Die Ventilschließglieder 18, 20 weisen einen sich zur Feder 32 erweiternden Abschnitt auf, mit dem sie gegen den entsprechend gegensätzlich geformten Ventilsitz 14, 16 aufliegen. Der Abstand der beiden Anschläge 24, 26 wird dann zum Abstand der beiden Ventilsitze 14, 16 so abgestimmt, dass in Ruhelage der Ventilstange 22 die Feder 32 die Ventilschließglieder 18, 20 gegen die Ventilsitze 14, 16 drückt, während ein geringer Abstand zu den Anschlägen 24, 26 vorliegt.

Erfindungsgemäß ist die Feder 32 von zwei topfförmigen Bauteilen 42, 44 umgeben, die als Tiefziehteile hergestellt sind, die als Schutzelement dienen und deren Mantelflächen 46, 48 die Feder 32 radial vollständig umgebene Die Böden 50, 52 der topfförmigen Bauteile 42, 44, weisen in der Mitte ein Loch auf, durch das die Ventilstange 22 und die Vorsprünge 38, 40 ragen. Die Böden 50, 52 liegen in der jeweils zugeordneten Ausnehmung 34, 36 der Ventilschließglieder 18, 20 auf, so dass die Feder 32 nicht direkt auf dem jeweiligen Ventilschließglied 18, 20 ruht, sondern den jeweiligen Boden 50, 52 der topfförmigen Bauteile 42, 44 gegen das Ventilschließglied 18, 20 belastet.

Im vorliegenden Ausführungsbeispiel sind die Ausnehmungen 34, 36 der beiden Ventilschließglieder 18, 20 gleich groß. Das erste topfförmige Bauteil 42 weist unmittelbar oberhalb der Position, an der es aus der Ausnehmung 34 ragt, eine Erweiterung 54 auf, von der aus sich die Mantelfläche 46 wieder hohlzylindrisch in Richtung zum anderen topfförmigen Bauteil 44, jedoch mit geringfügig größerem Durchmesser erstreckt. Der Durchmesser dieses Endes ist so gewählt, dass sein Innendurchmesser geringfügig größer ist als der Außendurchmesser des zweiten topfförmigen Bauteils 44. Dies bedeutet, dass das zweite topfförmige Bauteil 44 in das erste topfförmige Bauteil 42 geschoben werden kann. Dabei ist darauf zu achten, dass einerseits ein Klemmen auch bei Axialfluchtungsfehlern vermieden wird und andererseits eine Dichtwirkung erzielt wird.

Der Antrieb der Ventilstange 22 erfolgt in bekannter Weise über einen elektromotorischen Aktor 56, auf dessen Ausgangswelle 58 ein Exzenter 60 angeordnet ist, auf dessen Ausgangszapfen 62 ein Kugellager 64 befestigt ist, welches in einer Kulisse 66 eines Kopplungselementes 68 läuft, an dem die Ventilstange 22 befestigt ist.

Die Ventilstange 22 ragt durch eine Bohrung 70 im Gehäuse 2, wobei in der Bohrung 70, die Ventilstange 22 umgebend, zwei übereinander angeordnete Dichtringe 72, 74 angeordnet sind, die auf einem Abschirmelement 76 aufliegen, welches sich aus der als Stufenbohrung ausgeführten Bohrung 70, die Ventilstange 22 umgebend, in den Bereich des ersten Einlasses 4 erstreckt. Dieses Abschirmelement 76 dient einerseits als Führung der Ventilstange 22 und weist andererseits an ihrem Ende eine Einschnürung 78 auf, durch die der Strömungswiderstand entlang der Ventilstange erhöht wird, so dass eine Strömung entlang der Ventilstange deutlich verringert wird. Der Innendurchmesser dieser Einschnürung 78 ist dabei beispielsweise etwa 0,5mm größer als der Außendurchmesser der Ventilstange 22.

Wird nun der Aktor 56 im Uhrzeigersinn aus der in der Figur dargestellten Position gedreht, drückt das Kugellager 64 das Kopplungselement 68 und somit die Ventilstange 22 nach unten. Dies hat zur Folge, dass der zweite Anschlag 26 gegen das zweite Ventilschließglied 20 drückt und dieses entgegen der Federkraft vom Ventilsitz 16 abgehoben wird. Entsprechend kann beispielsweise gekühltes Abgas aus dem Einlass 4 in den Auslass 8 strömen.

Beim Abheben des Ventilschließgliedes 20 verbleibt das erste Ventilschließglied 18, da es nicht nach unten ausweichen kann, auf dem Ventilsitz 14, so dass die Größe der durchströmbaren Durchgangsöffnung 10 frei regelbar ist. Damit das Ventilschließglied 18 in dieser Stellung verharren kann, ist es gleitbeweglich auf der Ventilstange 22 angeordnet, das heißt, dass die Ventilstange 22 bei der Bewegung durch das Loch des Ventilschließgliedes 18 gleitet.

Das Abheben des Ventilschließgliedes 20 bewirkt des Weiteren, dass der Abstand der beiden Ventilschließglieder 18, 20 zueinander reduziert wird, so dass die Feder 32 komprimiert wird. Bei dieser Kompression gleitet das zweite topfförmige Bauteil 44 in das erste topfförmige Bauteil 42, so dass die Feder 32 in jeder Stellung vollständig umgeben bleibt. Der heiße Abgasstrom gelangt entsprechend nicht direkt in Kontakt mit der Feder 32. Stattdessen kann die Wärme zumindest teilweise über die Schutzelemente 42, 44 und die Ventilschließglieder 18, 20 zum Gehäuse 2 abgeführt werden. Auch gelangen Schmutzpartikel nicht in den Bereich der Feder beziehungsweise in den Bereich, in dem die Ventilschließglieder 18, 20 auf der Ventilstange 22 gleiten.

Wird der Aktor 56 wieder in die entgegengesetzte Richtung gedreht, bewegt sich das Ventilschließglied 20 wieder zurück auf seinen Ventilsitz 16, wobei eine Dekompression der Feder 32 stattfindet und der Überlappungsbereich der beiden topfförmigen Bauteile 42, 44 wieder verringert wird, bis schließlich die Ausgangslage erreicht wird.

Durch Weiterdrehen des Aktors 56 wird die Ventilstange nach oben in Richtung des Aktors 56 bewegt, wodurch die Mutter 28 das Ventilschließglied 18 vom ersten Ventilsitz 14 abhebt, während die Feder 32 weiterhin das zweite Ventilschließglied 20 auf seinen Ventilsitz 16 drückt und die Ventilstange 22 durch das Loch des zweiten Ventilschließgliedes nach oben gleitet. Die Feder 32 wird erneut in gleicher Weise, wie zuvor beschrieben, komprimiert. So wird die erste Durchgangsöffnung 10 geregelt, über welche beispielsweise eine fluidische Verbindung von einem den Abgaskühler umgehenden Bypasskanal über den ersten Einlass 4 zum Auslass 8 hergestellt wird.

Auch hier findet eine Abschirmung der Feder 32 und des Gleitbereiches der Ventilstange 22 vor der thermischen Belastung sowie der Schmutzpartikelbelastung durch den Abgasstrom statt. Entsprechend können günstigere Federrohstoffe verwendet werden. Ein Hängenbleiben der Ventilschließglieder auf der Ventilstange 22 wird ebenfalls verhindert. Es wird entsprechend eine kostengünstig herstellbare Ventilvorrichtung mit hoher Lebensdauer und Funktionalität geschaffen.

Es sollte deutlich sein, dass der Schutzbereich der Anmeldung nicht auf das beschriebene Ausführungsbeispiel beschränkt Ist. So ist die Anordnung der beiden Schutzelemente auch für Ventilvorrichtungen sinnvoll, die lediglich ein Ventilschließglied aufweisen. In diesem Fall wird das obere Element fest gegen ein Anschlagelement gefahren, welches im vorliegenden Ausführungsbeispiel das zweite Ventilschließglied ist. Die Funktion wäre dann auf die beschriebene Funktion des ersten Ventilschließgliedes beschränkt, wobei die Feder als Rückstellelement dienen würde. Weitere konstruktive Änderungen sind selbstverständlich ebenfalls denkbar.

## Patentansprüche

1. Ventilvorrichtung für eine Verbrennungskraftmaschine mit einem Gehäuse (2), in dem zumindest ein Einlass (4, 6) und ein Auslass (8) ausgebildet sind,
zumindest einer Durchgangsöffnung (10, 12), über die der zumindest eine Einlass (4, 6) mit dem zumindest einen Auslass (8) fluidisch verbindbar ist,
zumindest einem Ventilschließglied (18, 20), über welches die Durchgangsöffnung (10, 12) regelbar ist,
einer translatorisch mittels eines Aktors (56) bewegbaren Ventilstange (22), auf der das zumindest eine Ventilschließglied (18, 20) angeordnet ist,
einer Feder (32), die die Ventilstange (22) umgibt und die sich mit ihrem ersten Ende gegen das eine Ventilschließglied (18) abstützt und mit ihrem entgegengesetzten Ende gegen ein Anschlagelement (20) abstützt und
einem Element, welches im Wesentlichen die Feder (32) umgibt,
**dadurch gekennzeichnet, dass**
das Element im Wesentlichen durch zwei ineinander greifende radial geschlossene Mantelflächen (46, 48) gebildet ist, von denen die erste Mantelfläche (46) gegen das zumindest eine Ventilschließglied (18) anliegt und mit diesem bewegbar ist und die zweite gegen das Anschlagelement (20) anliegt, wobei das Ventilschließglied (18) relativ zum Anschlagelement (20) bewegbar ist und wobei die ineinander greifenden, radial geschlossenen Mantelflächen (46, 48) an topfförmigen Bauteilen (42, 44) ausgebildet sind, durch deren Böden (50, 52) die Ventilstange (22) ragt und die Feder (32) die Böden (50, 52) der topfförmigen Bauteile (42, 44) an der ersten Seite gegen das Anschlagelement (20) und an der gegenüberliegenden Seite gegen das Ventilschließglied (18) drückt.

2. Ventilvorrichtung für eine Verbrennungskraftmaschine nach Anspruch 1,
**dadurch gekennzeichnet, dass**
die eine der ineinander greifenden radial geschlossenen Mantelflächen (48) in der anderen Mantelfläche (46) angeordnet ist, wobei der Innendurchmesser der einen Mantelfläche (46) größer ist als der Außendurchmesser der anderen Mantelfläche (48).

3. Ventilvorrichtung für eine Verbrennungskraftmaschine nach Anspruch 2,
**dadurch gekennzeichnet, dass**
die topfförmigen Bauteile (42, 44) Tiefziehteile sind.

4. Ventilvorrichtung für eine Verbrennungskraftmaschine nach einem der vorhergehenden Ansprüche,
**dadurch gekennzeichnet, dass**
das Ventilschließglied (18) translatorisch bewegbar auf der Ventilstange (22) angeordnet ist und über die Feder (32) in Richtung eines Anschlags (24) belastet ist, der mit der Ventilstange (22) verbunden ist.

5. Ventilvorrichtung für eine Verbrennungskraftmaschine nach Anspruch 4,
**dadurch gekennzeichnet, dass**
die Ventilstange (22) an ihrem Ende ein Außengewinde (30) aufweist, auf welches eine Mutter (28) geschraubt ist, die als Anschlag (24) dient.

6. Ventilvorrichtung für eine Verbrennungskraftmaschine nach einem der vorhergehenden Ansprüche,
**dadurch gekennzeichnet, dass**
auf der Ventilstange (22) ein zweites Ventilschließglied (20), welches als Anschlagelement für die Feder (32) dient, beabstandet vom ersten Ventilschließglied (18) angeordnet ist, und über welches eine zweite Durchgangsöffnung (12) regelbar ist, die zu einem zweiten Einlass (6) oder Auslass führt.

7. Ventilvorrichtung für eine Verbrennungskraftmaschine nach Anspruch 6,
**dadurch gekennzeichnet, dass**
beide Ventilschließglieder (18, 20) Ausnehmungen (34, 36) aufweisen, welche eine zu den Böden (50, 52) der topfförmigen Bauteile (42, 44) korrespondierende Form aufweisen und in die die topfförmigen Bauteile (42, 44) ragen.

8. Ventilvorrichtung für eine Verbrennungskraftmaschine nach einem der Ansprüche 6 oder 7,
**dadurch gekennzeichnet, dass**
an beiden Ventilschließgliedern (18, 20) sich in das Innere der Feder (32) erstreckende ringförmige Vorsprünge (38, 40) ausgebildet sind.

9. Ventilvorrichtung für eine Verbrennungskraftmaschine nach einem der Ansprüche 6 bis 8,
**dadurch gekennzeichnet, dass**
beide Ventilschließglieder (18, 20) translatorisch verschiebbar auf der Ventilstange (22) angeordnet sind und durch die Feder (32) zwischen den beiden Ventilschließgliedern (18, 20) jeweils entgegengesetzt in Richtung von Anschlägen (24, 26), die an der zur Feder (32) entgegengesetzten Seite der beiden Ventilschließglieder (18, 20) an der Ventilstange (22) ausgebildet sind, belastet sind.

10. Ventilvorrichtung für eine Verbrennungskraftmaschine nach einem der Ansprüche 6 bis 9,
**dadurch gekennzeichnet, dass**
die Ventilschließglieder (18, 20) durch die Feder (32) in Richtung ihrer zugeordneten Ventilsitze (14, 16) belastet sind.

## Claims

1. A valve device for an internal combustion engine, the valve device comprising:
a housing (2) formed with at least one inlet (4, 6) and one outlet (8),
at least one passage opening (10, 12) configured to fluidically connect the at least one inlet (4, 6) with the at least one outlet (8),
at least one valve-closing member (18, 20) configured to control the at least one passage opening (10, 12),
a valve rod (22) on which the at least one valve-closing member (18, 20) is arranged, the valve rod being configured so as to be translationally movable by an actuator (56),
a spring (32) surrounding the valve rod (22), one end of the spring being supported against the first valve-closing member (18), and the opposite end of the spring being supported against the stop element (20), and
an element configured to substantially surround the spring (32),
**characterized in that**
the element is substantially formed by two radially closed lateral surfaces (46, 48) which are configured to be in mutual engagement with each other, the first lateral surface (46) being arranged to abut against the at least one valve-closing member (18) and being configured to be movable therewith, and the second being arranged to abut against the stop element (20), the valve closing member (18) being configured to move relative to the stop element (20), wherein the valve closing member (18) is movable relative to the stop element (20) and wherein the radially closed lateral surfaces (46, 48) engaging each other are formed at pot-shaped parts (42, 44) through the bottoms (50, 52) of which the valve rod (22) protrudes and the spring (32) presses the bottoms (50, 52) of the pot-shaped parts (42, 44) against the stop element (20) on the one side and against the valve closing member (18) on the other side.

2. The valve device for an internal combustion engine as recited in claim 1, **characterized in that** one (48) of the radially closed lateral surfaces engaging each other is arranged inside the other lateral surface (46), wherein the inner diameter of the other lateral surface (46) is larger than the outer diameter of the one lateral surface (48).

3. The valve device for an internal combustion engine as recited in claim 2, **characterized in that** the pot-shaped parts (42, 44) are each a deep-drawn part.

4. The valve device for an internal combustion engine as recited in one of the preceding claims, **characterized in that** the valve-closing member (18) is disposed on the valve rod (22) for translational movement and is biased by the spring (32) towards a stop (24) connected with the valve rod (22).

5. The valve device for an internal combustion engine as recited in claim 4, **characterized in that** the valve rod (22) comprises an end with an outer thread (30) on which a nut (28) is screwed so as to serve as the stop (24).

6. The valve device for an internal combustion engine as recited in one of the preceding claims, **characterized in that** a second valve-closing member (20) is arranged on the valve rod (22) at a distance from the first valve-closing member (18), the second valve-closing member being configured as the stop element for the spring (32) and by which a second passage opening (12) can be controlled that leads to a second inlet (6) or outlet.

7. The valve device for an internal combustion engine as recited in claim 6, **characterized in that** both valve-closing members (18, 20) comprise a recess (24, 26), the recesses having a shape which corresponds to a shape of the bottoms (50, 52) of the pot-shaped parts (42, 44) and into which the pot-shaped parts extend.

8. The valve device for an internal combustion engine as recited in one of claims 6 or 7, **characterized in that** each of the valve-closing members (18, 20) comprises annular protrusions (38, 40) which extend into the interior of the spring (32).

9. The valve device for an internal combustion engine as recited in one of claims 6 to 8, **characterized in that** each of the valve-closing members (18, 20) is arranged on the valve rod (22) so as to be translationally movable, the valve closing members (18, 20) being biased by the spring (32) towards stops (24, 26) formed on the valve rod (22) on sides of the two valve-closing members (18, 20) opposite the spring (32).

10. The valve device for an internal combustion engine as recited in one of claims 6 to 9, **characterized in that** the valve-closing members (18, 20) are biased by the spring (32) towards their associated valve seats (14, 16).

## Revendications

1. Dispositif de soupape pour un moteur à combustion interne, comprenant
un boitier (2) dans lequel sont formées au moins une entrée (4, 6) et une sortie (8),
au moins une ouverture de passage (10, 12) à travers laquelle ladite au moins une entrée (4, 6) peut être reliée de manière fluidique à ladite au moins une sortie (8),
au moins un élément de fermeture de soupape (18, 20) par laquelle l'ouverture de passage (10, 12) peut être commandée,
une tige de soupape (22) apte à être déplacée en translation par un actionneur (56), ledit au moins un élément de fermeture de soupape (18, 20) étant disposé sur la tige,
un ressort (32) entourant la tige de soupape (22) et s'appuyant par une première extrémité sur l'un des éléments de fermeture de soupape (18) et s'appuyant par son extrémité opposée sur un élément de butée (20), et
un élément essentiellement entourant le ressort (32),
**caractérisé en ce que**
ledit élément est formé sensiblement par deux surfaces latérales (46, 48), s'emboitant l'une dans l'autre et fermées dans la direction radiale, dont la première surface latérale (46) reste sur ledit au moins un élément de fermeture de soupape (18) et peut être déplacée avec celui-ci, et dont la deuxième reste sur l'élément de butée (20), ledit élément de fermeture de soupape (18) étant déplaçable per rapport à l'élément de butée (20), et les surfaces latérales (46, 48), s'emboitant l'une dans l'autre et fermées dans la direction radiale, étant formées sur des composants (42, 44) en forme de pot, la tige de soupape (22) saillant à travers les fonds (50, 52) des composants, et le ressort (32), d'une côté, poussant les fonds (50, 52) des composants (42, 44) en forme de pot contre l'élément de butée (20) et, de la côté opposée, contre ledit élément de fermeture de soupape (18).

2. Dispositif de soupape pour un moteur à combustion interne selon la revendication 1, **caractérisé en ce que** l'une (48) des surfaces latérales, s'emboitant l'une dans l'autre et fermées dans la direction radiale, est disposée dans l'autre surface latérale (46), le diamètre intérieur de ladite autre surface latérale (46) étant plus grande que le diamètre extérieur de ladite une surface latérale (48).

3. Dispositif de soupape pour un moteur à combustion interne selon la revendication 2, **caractérisé en ce que** les composants (42, 44) en forme de pot sont des pièces emboutées.

4. Dispositif de soupape pour un moteur à combustion interne selon l'une quelconque des revendications précédentes, **caractérisé en ce que** ledit élément de fermeture de soupape (18) est disposé sur la tige de soupape (22) de manière déplaçable en translation, et qu'il est précontraint par le ressort (32) dans la direction d'une butée (24) reliée à la tige des soupape (22).

5. Dispositif de soupape pour un moteur à combustion interne selon la revendication 4, **caractérisé en ce que** la tige de soupape (22) a un filetage extérieur à son extrémité, sur lequel est vissé un écrou (28) servant comme butée (24).

6. Dispositif de soupape pour un moteur à combustion interne selon l'une quelconque des revendications précédentes, **caractérisé en ce qu'**un deuxième élément de fermeture de soupape (20) est disposé sur la tige de soupape (22) à distance du premier élément de fermeture de soupape (18), ledit élément servant comme élément de butée pour le ressort (32), et par lequel élément il est possible de commander une deuxième ouverture de passage (12) menant à une deuxième entrée (6) ou sortie.

7. Dispositif de soupape pour un moteur à combustion interne selon la revendication 6, **caractérisé en ce que** les deux éléments de fermeture de soupape (18, 20) comprend des échancrures (34, 36) qui présentent une forme correspondant aux fonds (50, 52) des composants en forme de pot (42, 44) et dans lesquelles s'étendent les composants en forme de pot (42,44).

8. Dispositif de soupape pour un moteur à combustion interne selon la revendication 6 ou 7, **caractérisé en ce que** les deux éléments de fermeture de soupape (18, 20) sont formés avec des saillies (38, 40) annulaires s'étendant dans l'intérieur du ressort (32).

9. Dispositif de soupape pour un moteur à combustion interne selon l'une quelconque des revendications 6 à 8, **caractérisé en ce que** les deux éléments de fermeture de soupape (18, 20) sont disposés sur la tige de soupape (22) de manière déplaçable en translation et sont précontraints, dans des directions opposées l'un à l'autre, par le ressort (32) entre les deux éléments de fermeture de soupape (18, 20), vers des butées (24, 26) formées sur la tige de soupape (22) sur des côtés des deux éléments de fermeture de soupape (18, 20) opposés au ressort (32).

10. Dispositif de soupape pour un moteur à combustion interne selon l'une quelconque des revendications 6 à 9, **caractérisé en ce que** les éléments de fermeture de soupape (18, 20) sont précontraints par le ressort (32) vers leurs sièges de soupape (14, 16) associées.
